# EUROPEAN PATENT APPLICATION

(11) **EP 3 984 669 A1**
(43) Date of publication of application: **20.04.2022**
(21) Application number: 20020476.6
(22) Date of filing: 15.10.2020
(51) Int. Cl.: B22F 12/30, B23P 6/00, B33Y 30/00, B23K 26/34, C23C 24/04, C23C 4/00, C23C 24/08

(54) **METHOD OF REGENERATING A BUILD PLATE**

(71) Applicant: Linde GmbH, 82049 Pullach (DE)
(72) Inventor: Ammann, Thomas, 80939 München (DE); Bauer, Dominik, 82110 Germering (DE)
(74) Representative: Gellner, Bernd

(57) **Abstract**

The present invention refers to a method of regenerating a build plate used in additive manufacturing (AM) process, wherein a surface of the build plate has become at least partially non-planar during use, the method comprising applying a metal coating to the surface. Such a process substantially eliminates the need of using non cost-effective machining processes for restoring the surface of the build plate and allows to reuse the build plate multiple times. The invention further relates to a method of making components including the step of regenerating a build plate.

## Description

The present invention relates to a method of regenerating a build plate (also referred to as a build substrate) used in additive manufacturing (AM) process, particularly, but not exclusively, by applying a metal coating to a surface of the build plate, and to a method of making components including the step of regenerating a build plate.

The main differences between processes for additive manufacturing (AM) are in the way layers are deposited to create parts and in the materials that are used. Some methods melt or soften the material to produce the layers, for example selective laser melting (SLM) or direct metal laser sintering (DMLS), selective laser sintering (SLS), fused deposition modeling (FDM), or fused filament fabrication (FFF), while others cure liquid materials using different sophisticated technologies.

Selective laser sintering (SLS) is an additive manufacturing (AM) technique that uses a laser as the power source to sinter powdered material, aiming the laser automatically at points in space defined by a 3D model, binding the material together to create a solid structure. It is similar to direct metal laser sintering (DMLS). Both are instantiations of the same concept but differ in technical details. Selective laser melting (SLM) uses a comparable concept, but in SLM the material is fully melted rather than sintered, allowing different properties (crystal structure, porosity, and so on). SLS involves the use of a high power laser (for example, a fibre laser or diode laser) to fuse small particles of plastic, metal, ceramic, or glass powders into a mass that has a desired three-dimensional shape. The laser selectively fuses powdered material by scanning cross-sections generated from a 3-D digital description of the part (for example from a CAD file or scan data) on the surface of a powder bed. After each cross-section is scanned, the powder bed is lowered by one layer thickness, a new layer of material is applied on top, and the process is repeated until the part is completed. Because finished part density depends on peak laser power, rather than laser duration, a SLS machine typically uses a pulsed laser.

Selective laser melting (SLM) is a particular rapid prototyping, 3D printing, or Additive Manufacturing (AM) technique designed to use a high power-density laser to melt and fuse metallic powders together. SLM is considered to be a subcategory of Selective Laser Sintering (SLS). The SLM process has the ability to fully melt the metal material into a solid 3D-dimensional part unlike SLS. With selective laser melting, thin layers of atomized fine metal powder are evenly distributed using a coating mechanism onto a substrate plate, usually metal, that is fastened to an indexing table that moves in the vertical (Z) axis. This takes place inside a chamber containing a tightly controlled atmosphere of inert gas, either argon or nitrogen or various gas mixtures at oxygen levels below 5000 parts per million. Once each layer has been distributed, each 2D slice of the part geometry is fused by selectively melting the powder. This is accomplished with a high-power laser beam, usually an ytterbium fiber laser with hundreds of watts. The laser beam is directed in the X and Y directions with two high frequency scanning mirrors. The laser energy is intense enough to permit full melting (welding) of the particles to form solid metal. The process is repeated layer after layer until the part is complete.

Electron-beam additive manufacturing or electron-beam melting (EBM) is a type of additive manufacturing, or 3D printing, for metal parts. The raw material (metal powder or wire) is placed under a vacuum and fused together from heating by an electron beam. This technique is distinct from selective laser sintering as the raw material fuses having completely melted.

Metal powders can be consolidated into a solid mass using an electron beam as the heat source. Parts are manufactured by melting metal powder, layer by layer, with an electron beam in a high vacuum. This powder bed method produces fully dense metal parts directly from metal powder with characteristics of the target material. The EBM machine reads data from a 3D CAD model and lays down successive layers of powdered material. These layers are melted together utilizing a computer-controlled electron beam. In this way it builds up the parts. The process takes place under vacuum, which makes it suited to manufacture parts in reactive materials with a high affinity for oxygen, e.g. titanium. The process is known to operate at higher temperatures (up to 1000 °C), which can lead to differences in phase formation though solidification and solid-state phase transformation.

The powder feedstock is typically pre-alloyed, as opposed to a mixture. That aspect allows classification of EBM with selective laser melting (SLM), where competing technologies like SLS and DMLS require thermal treatment after fabrication. Compared to SLM and DMLS, EBM has a generally superior build rate because of its higher energy density and scanning method.

Direct metal laser sintering (DMLS) is an additive manufacturing metal fabrication technology, occasionally referred to as selective laser sintering (SLS) or selective laser melting (SLM), that generates metal prototypes and tools directly from computer aided design (CAD) data. It is unique from SLS or SLM because the process uses a laser to selectively fuse a fine metal powder. DMLS uses a variety of alloys, allowing prototypes to be functional hardware made out of the same material as production components. Since the components are built layer by layer, it is possible to design organic geometries, internal features and challenging passages that could not be cast or otherwise machined. DMLS produces strong, durable metal parts that work well as both functional prototypes or end-use production parts. The DMLS process begins with a 3D CAD model whereby a .stl file is created and sent to the machine's computer program. The DMLS machine uses a high-powered fiber optic laser or diode laser with a power of up to 1000 watts. Inside the build chamber area, there is a material dispensing platform and a built platform along with a recoater blade used to move new powder over the built platform. The technology fuses metal powder into a solid part by melting it locally using the focused laser beam. Parts are built up additively layer by layer, typically using layers 20 micrometers thick.

In General additive manufacturing is a manufacturing technology that includes a methodology whereby a heat source melts a feedstock of material which is deposited onto a substrate. Computer control of the movement of the heat source, and the source of the feedstock, makes it possible to build complex components. In additive manufacturing the processing is not limited to the above-mentioned methods in which metal powders are processed but composites or polymers are processed. The heat source can include (but is not limited to) the already mentioned laser beam, an arc, or other plasma-based heat sources.

One of the reasons why the overall cost per part for SLM and other AM processes is that the build plate on which the AM process takes place has to be reworked to produce a flat surface at the end of each build, and the build plate may only be reworked a finite number of times, after which it has to be replaced. The build plates wear out quite quickly during the repeated cycles of AM, and their surface eventually becomes unsuitable for the use in the build chamber. Currently, the build plates are produced by complex machining processes, and regeneration of the surface normally comprises the step of mechanical reworking. Accordingly, production and maintenance of build plates contributes significantly towards the average cost of components made be additive manufacturing.

It is an object of the present invention to provide a method and a device for producing a component by additive manufacture that at least partially mitigates the problems described above.

One or more of these problems are solved by a method according to independent claims 1 and 11. Advantageous embodiments are defined in the sub-claims.

According to an aspect of the present invention, a method of regenerating a build plate used in additive manufacturing (AM) process, wherein a surface of the build plate has become at least partially non-planar during use or after separating the built components (e.g. by sawing), requiring a mechanical milling process prior to further use of the build plate, the method comprising applying a metal coating to the surface. Advantageously, this allows to restore the planar surface of the build plate by applying a layer of coating. Furthermore, the need to replace the build plate is eliminated as the process of applying a coating can be repeated several times.

In an embodiment, the additive manufacturing process comprises selective laser melting.

In another embodiment, the metal coating is applied by thermal spraying. Advantageously, this allows to distribute the coating evenly and homogeneously, as the thermal spraying process heating and subsequent atomizing of the molten metal onto the build plate or other part of the build chamber that needs to be regenerated.

In yet another embodiment, the metal coating is applied by a coating deposition method. Advantageously, these deposition methods allow to produce a coating or a film of a controlled thickness an, in turn, to decrease recycling or manufacturing costs.

In another embodiment, the coating deposition method is cold spraying. This method employs low temperatures compared to other spraying techniques and allows to keep the depositing powder in a solid state. This is advantageous as the powder is not molten and therefore can retain its primary properties during and after deposition. Furthermore, it allows for depositing dissimilar materials, where there is a need for creating a composite coating made up from the materials with notably differing properties.

In yet another embodiment, the metal coating is applied by deposition welding. Advantageously, this method incorporated both laser deposition welding and TIG deposition welding and therefore allows to use a wide variety of metals to be deposited onto the build plate surface.

In an embodiment, the metal coating is of substantially the same composition as the build plate. The powder to be applied as a coating should normally correspond to the material of the build plate in order to have affinity with its surface. Furthermore, it is desirable to have the surface of the build plate to be of the same composition as the part to be manufactured in the SLM process, so it is important to preserve the composition of the build plate after it's been regenerated.

In another embodiment, the build plate and the metal coating comprise a composite material. In yet another embodiment, the metal coating comprises any of titanium, copper, aluminium, steel or stainless steel or any other sprayable and/or fusion weldable material. This arrangement is advantageous when a better control of the heat balance is required. Thus, according to this embodiment it is possible to combine two or more materials with different thermal conductivity, such as copper and titanium, wherein the bulk copper of the build plate distributes the heat more evenly, whereas titanium coating allows for affinity of the surface with the part to be manufactured.

In an embodiment, the build plate comprises one or more cooling channels. This is advantageous when extra ventilation and/or heat dissipation and, in turn, process efficiency optimization is needed. It is also possible to selectively heat the build plate to reach different properties in the generated material on different areas on the build plate. As such, the build plate may comprise separate heating channels through which hot fluid may flow. Alternatively, hot fluid may flow through the cooling channels when required.

According to an aspect of the present invention, a method of making components using an additive manufacture apparatus, said method comprising the steps of producing a component by additive manufacture on a build plate; regenerating the build plate using the method of any preceding claim; returning the regenerated build plate into the apparatus; and producing a further component by additive manufacture on the regenerated build plate. Advantageously, this allows to reuse the existing build plate multiple times, thus leading to a cost efficient and economical manufacturing process.

The invention is explained below with the aid of an embodiment shown in the drawings. The drawing shows in:
Figure 1 a rough schematic view of a system for powder bed additive manufacturing by Selective Laser Sintering (SLS) or Selective Laser Melting (SLM).
Figure 2 a rough schematic view of the surface before regenerating step.
Figure 3 a rough schematic view of the surface after regenerating.
Figure 4 a rough schematic view of the thermal spraying process.
Figure 5 a cross-section through a build plate showing cooling channels.

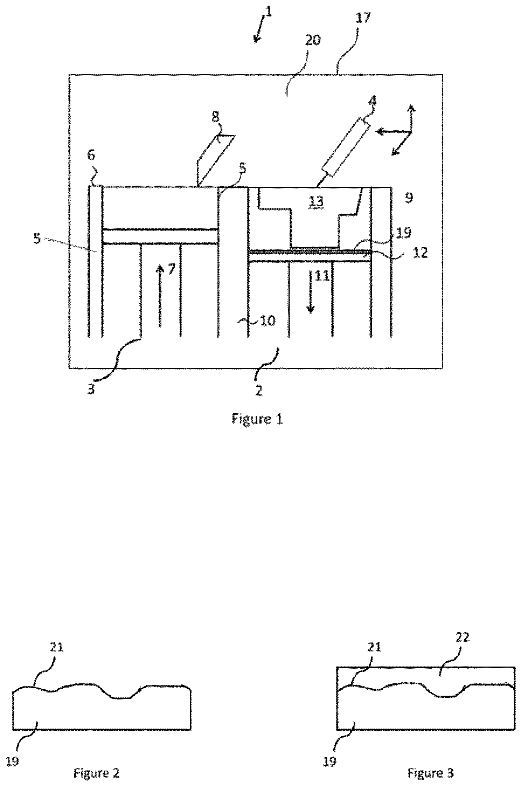

Figure 1 shows an apparatus for additive manufacturing 1 according to an embodiment of the present invention. The apparatus shown in figure 1 is an apparatus for use in selective laser melting (SLM) or selective laser sintering (SLS). However, it is clear that the present invention is applicable for all methods and devices for additive manufacturing disclosed in this description.

The apparatus 1 comprises a production cylinder 2, a delivery cylinder 3 and a heat source 4.

The heat source 4 according to a preferred embodiment comprises a laser and a corresponding scanner system for melting metal powder (not shown). However, other heat sources, such as an electron beam in combination with a scanning system, are also possible.

The delivery cylinder 3 comprises a housing 5 with a wall 6 wherein a powder delivery piston 7 is disposed inside the housing 5.

A powder applying device 8, for example a roller, is provided for pushing a metal powder from the delivery cylinder 3 to the production cylinder 2.

The production cylinder 3 comprises a housing 9 with a wall 10.

A lift table 11 with a built platform 12 is disposed inside the wall 10 of the housing 9. The lift table 11 and the corresponding built platform 12 embody a fabrication piston.

The wall 10 of the housing 9 and the built platform 12 of the lift table 11 of the production cylinder 2 define a built space 13.

The built space 13 houses the fabrication powder bed and therefore the object being fabricated.

The build plate 19 is a separate part connected to the build platform 12. The build platform 12 remains permanently in the machine irrespective of what component is being made, and a suitable build plate 19 is placed over the build platform 12 for each manufacturing process. In the illustrated embodiment the build plate 19 is made from the same material as the component to be manufactured. However, in other embodiments, the bulk of the build plate 19 may be made from a different material to the component to be manufactured, with a surface coating of a material that is the same material as the component to be manufactured. This may reduce the cost of the build plate in the event that the component is to be made from an expensive alloy.

The build plate provides a flat, planar surface on which the additive manufacture process can take place. Use of a build plate that is made from the same material as the component to be manufactured ensures that no contamination with undesired material occurs during the manufacturing process. In one embodiment of the invention the coating matches the material of the to-be-built components while it is different from the material of the build plate

Furthermore a processing chamber 17 is provided surrounding the production cylinder 2, the delivery cylinder 3 and the heat source 4.

The manufacturing space 20 according to the present invention is therefore the build space 13 of the production cylinder 2 defined by the 10 wall of the housing 9 of the production cylinder 2 and the lift table 11 with the built platform 12 disposed inside the wall 10 of the housing 9, and/or the manufacturing space is the room within the processing chamber 17.

The apparatus 1 may be used to produce parts by Selective Laser Melting (SLM) in the conventional way. In this case the heat source 4 is a high-power density laser. Briefly, at the start of the process, a first layer of powder is applied on top of the build plate 19 by the powder applying device 8. Optionally, the powder and build plate may be predetermined to a temperature below the melting point of the powder, at which the process is to take place. The scanner system then controls the laser 4 to heat selected portions of the first layer of powder so as to melt these portions. A further layer of powder is then applied on top of the powder bed, and if the powder is to be preheated then the laser 4 is controlled to heat the further layer of powder to the predetermined temperature. The laser 4 is then controlled to further heat selected regions so as to melt the selected regions. The process is repeated until all of the parts of the component that are required to be fused have been melted by the laser 4. At this point, formation of the part is complete, and the completed part and build plate 19 are removed from the manufacturing space 20. The part 13 is then removed from the build plate 19, for example using a band saw.. After the removal of the printed material from the build plate 19, the planar surface of the build plate may have been degraded, forming a non-planar surface 21 as shown in Figure 2. This due to partial sintering of the printed component onto the surface of the build plate 19. The component is generally removed by sawing, which leaves a non-planar surface.
Depending upon the severity of the degrading of the planar surface, it may be necessary to regenerate the surface to make it substantially planar (flat) prior to the next use. Hitherto, regeneration of build plates has typically been performed by mechanical processing, such as machining. This leads to a thinning of the build plate 19, and after a number of repeated regeneration cycles the build plate 19 has to be discarded because the thickness of the plate becomes unsuitable to support the printed component.

It has been discovered by the inventors that the planar surface of the build plate can be restored by applying a metallic coating onto the degraded surface of the build plate. As shown in figure 3, such a coating covers the defects that make the surface non-planar, thereby providing a new, planar surface on the build plate 19. The metallic coating may be the same material as the build plate. However, in alternative embodiments, the materials of the metallic coating and rest of the build plate may be different.

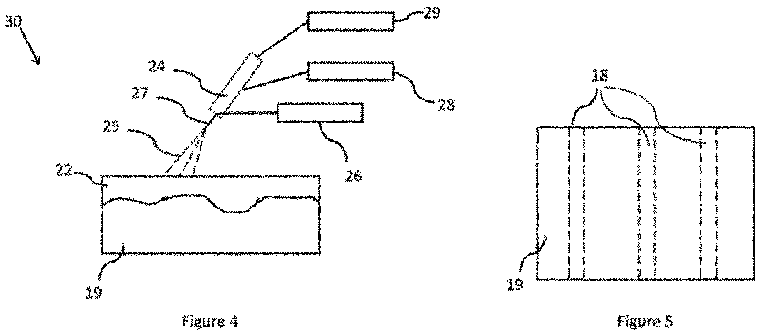

Figure 4 shows an example system 30 for applying a coating to a build plate by thermal spraying of the metal onto the build plate 19 to restore the planarity of the surface, as shown in Figure 3. It comprises of a spray gun 24 and a feeder 26 that supplies metal powder to the torch through conduits. The spray gun 24 is connected to a power supply 28 and a media supply 29 that supplies gases or liquids for the generation of the flame or plasma jet within the spray gun 24. The feeder supplies the metal powder into the flame or plasma jet within the spray gun 24, and a continuous stream of molten metal powder 25 suspended in a jet of flame or plasma is ejected from the feeder 24 through a feeder nozzle 27 and covers the non-planar surface of the build plate 19 to form a layer of metallic coating 22. A control unit for controlling all parts of the spray system can be a standalone unit, or optionally there can be a separate control unit for each part of the system. The spray gun 24 may be operated by a robot (not shown). Although the system shown in figure 4 is for applying a coating by thermal spraying, it will be understood that other coating methods may also be suitable. For example, suitable coating deposition methods may further include gas dynamic cold spraying or deposition welding. These are known methods and include either acceleration of solid particles in a supersonic gas to cause plastic deformation or using electrodes to melt the solid particles prior to deposition. In all cases the molten (or plastically deformed) particles are deposited onto the non-planar surface 21 of the building plate 19. A layer of metallic coating 22 that covers any surface imperfections and that has a planar surface 23 is then formed on the surface of the building plate, as shown in Figure 3.
In some embodiments, it may be necessary to lightly machine the coated surface to produce a sufficiently flat surface. However, the amount of machining required is reduced by the presence of the coating, and a reduction in the overall thickness is avoided by only machining after application of the coating.
This method of regenerating parts and components allows reuse of the build plate 19 multiple times without reducing the thickness of the build plate. Furthermore, the coating may have any suitable composition, thus allowing the use of a build plate 19 made from a given material to be used in a variety of AM applications where printed components made from a different material to the build plate can be manufactured. This is achieved by applying a coating having the same composition as the component to be manufactured to the build plate.
In operation, a process of using and regenerating the build plate is as follows. First, the component is produced by SLM using the apparatus shown in figure 1. However, it will be understood that any suitable additive manufacture technique or method could also be used.. The completed component 13 and build plate 19 are then removed from the manufacturing space 20. The component 13 is then detached from the build plate 19 using any suitable technique, for instance a band saw. The build plate 19 at this stage is no longer suitable for further use as a support for the printed components due to non-planar surface inhomogeneities related to removal of the printed component from the build plate. The build plate is then regenerated by applying a metallic coating to the non-planar surface using a thermal spraying apparatus as shown in figure 4. However, it will be understood that other coating deposition methods could also be used. Application of the metallic coating produces a flat, planar surface on the build plate, such that it is suitable for use in a further AM process.
The coating may be made from the same material as the rest of the build plate 19. Alternatively, the surface of the build plate can be covered with a differing coating if, for example, it is required to improve the process parameters and metals/alloys with differing thermal properties are to be used. Once the surface is coated and the non-planar layer is restored, the build plates is returned into the manufacturing space 20 and reused in the subsequent AM process. The number of cycles for which the build plate 19 can be used is therefore significantly increased as compared to prior art methods in which the surface of the build plate is mechanically reworked, when eventually the thickness of the plate decreases significantly and the plate cannot be used any further.
As discussed above, the build plate 19 is normally selected to match the composition of the printed component. Thus, for example, if the printed component is made, without limitation, of steel or titanium alloy, it is desirable that the build plate is also made of the same steel or titanium alloy. However, in some embodiments it may also be desirable to improve the process parameters by changing physical properties of the build plate such its thermal conductivity. In this case the build plate 19 can be made of a material with enhances thermal conductivity, for instance copper. However, when the steel or titanium alloy is to be printed, it is required that the composition of the surface of the build plate matches the composition of the printed part, therefore the build plate made of copper can be covered with a thin layer of the matching steel or titanium alloy, thus resulting in the formation of a so called composite build plate. It is understood that any suitable metal and/or alloy can be used to form the coating on the build plate, the choice of material depending on the printed component composition. Said metals without limitation include titanium, aluminium, copper and steel.
In another embodiment, in order to improve the thermal conductivity of the build plate, the build plate 19 may have a plurality of cooling channels 18, as shown in figure 5. These channels may be positioned in a longitudinal or transverse direction. The channels 18 may accelerate the removal of heat from the build plate by allowing air circulation. Alternatively, a liquid coolant may be pumped through the cooling channels 18, which may allow further control over the rate of heat removal by controlling the flow rate of the coolant in the channels. If it is desired to heat a part of the build plate, then hot fluid may be passed through one or more of the cooling channels. In other embodiments, separate heating channels may be provided.
Unless otherwise stated, all technical features described in connection with the embodiments of the apparatus are applicable in connection with method steps for the method according to the present invention.

### Refernce signs

- 1: device
- 2: production cylinder (build cylinder)
- 3: delivery cylinder (supply cylinder)
- 4: heat source
- 5: housing
- 6: wall
- 7: powder delivery piston
- 8: powder applying device
- 9: housing
- 10: wall
- 11: lift table
- 12: built platform
- 13: build space
- 17: processing chamber
- 18: cooling channels
- 19: build plate
- 20: manufacturing space
- 21: non-planar surface
- 22: coating
- 23: planar surface
- 24: spray gun
- 25: molten metal powder
- 26: feeder
- 27: nozzle
- 28: power supply
- 29: media supply

## Claims

1. A method of regenerating a build plate used in additive manufacturing (AM) process, wherein a surface of the build plate has become at least partially non-planar or worn during use, the method comprising applying a metal coating to the surface.

2. The method of claim 1 wherein the additive manufacturing process comprises selective laser melting.

3. The method of claim 1, wherein the metal coating is applied by a coating deposition method.

4. The method of claim 3, wherein the coating deposition method is thermal spraying.

5. The method of claim 3, wherein the coating deposition method is cold gas spraying.

6. The method of claim 3, wherein the metal coating is applied by deposition welding.

7. The method of any preceding claim, wherein the metal coating is of substantially the same composition as the build plate.

8. The method of any one of claims 1-6, wherein the build plate and the metal coating comprise a composite material.

9. The method of any preceding claim, wherein the metal coating comprises any of titanium, copper, aluminium, steel, stainless steel or other metallic materials

10. The method of any preceding claim, wherein the coating comprises of a non-metallic material, optionally wherein the coating comprisies a ceramic material.

11. The method of claim 1, wherein the build plate comprises one or more cooling channels.

12. The method of claim 1, wherein the build plate comprises one or more heating channels.

13. The method of any preceding claim, further comprising machining the regenerated build plate.

14. A method of making components using an additive manufacture apparatus, said method comprising the steps of:
- producing a component by additive manufacture on a build plate;
- regenerating the build plate using the method of any preceding claim;
- returning the regenerated build plate into the apparatus;
- producing a further component by additive manufacture on the regenerated build plate.
